(19) **Europäisches Patentamt** / **European Patent Office** / **Office européen des brevets**

(11) **EP 4 674 515 A1**

(12) # EUROPEAN PATENT APPLICATION

(43) Date of publication:
**07.01.2026   Bulletin 2026/02**

(21) Application number: **24186187.1**

(22) Date of filing: **03.07.2024**

(51) International Patent Classification (IPC):
**B01D 67/00** *(2006.01)*     **B01D 69/00** *(2006.01)*
**B01D 69/06** *(2006.01)*     **B01D 69/08** *(2006.01)*
**B01D 71/34** *(2006.01)*     **B01D 71/64** *(2006.01)*
**B01D 71/68** *(2006.01)*

(52) Cooperative Patent Classification (CPC):
**B01D 69/08; B01D 67/0011; B01D 69/06;
B01D 69/087; B01D 71/64; B01D 71/68**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **Elantas GmbH**
  **46483 Wesel (DE)**

• **Elantas Europe Srl**
  **43044 Collechio (PR) (IT)**

(72) Inventors:
• **HOFFMANN, Ralf-Ludger**
  **46483 Wesel (DE)**
• **SCAGNOLI**
  **46483 Wesel (DE)**

(74) Representative: **Altana IP Department
Altana Management Services GmbH
Abelstraße 45
46483 Wesel (DE)**

(54) **POLYMER SOLUTIONS FOR THE PREPARATION OF POLYMER MEMBRANES**

(57)     The present invention relates to polymer solutions, a method for preparing a flat sheet polymer membrane and a hollow fiber polymer membrane therefrom and the use of 3-alkyloxy-N,N-dialkylpropionamide as a solvent for the preparation of polymer solutions.

Processed by Luminess, 75001 PARIS (FR)

EP 4 674 515 A1

## Description

### Technical field

The present invention relates to polymer solutions, a method for preparing a flat sheet polymer membrane and a hollow fiber polymer membrane therefrom and the use of 3-alkyloxy-N,N-dialkylpropionamide, wherein the alkyl groups are independently selected from alkyl groups having 1, 2 or 3 carbon atoms, as a solvent for the preparation of polymer solutions.

### Background

In the realm of liquid purification and osmosis processes, porous polymer sheet membranes and hollow fiber membranes emerge as pivotal technologies, playing a crucial role in the refinement of gases and liquids, notably water. In particular, they facilitate essential procedures like water desalination and dialysis. These membrane systems serve as the linchpin in addressing pressing global challenges related to clean water access and medical treatments.

Fabricated through a meticulously controlled process known as non-solvent induced phase separation, these membranes derive their unique structural characteristics from carefully formulated polymer solutions. This intricate manufacturing method involves the deliberate introduction of non-solvents to induce a phase separation within the polymer solution, leading to the formation of porous structures with controlled morphology. The resulting membranes exhibit a high degree of selectivity, enabling the efficient separation of components in complex liquid mixtures.

In the prior art, N-methyl-2-pyrrolidone is used as the solvent in the preparation of polymer membranes.

The object of the present invention is manufacturing of porous polymer sheet membranes and hollow fiber membranes that have an improved permeability and excellent retention.

The object is solved by a polymer solution comprising a polymer, water, optionally, an additive, and 3-alkyloxy-N,N-dialkylpropionamide ; a first method for preparing a flat sheet polymer membrane, the method comprising the steps of providing a polymer solution according to the invention, forming a film of the polymer mixture on a substrate and applying conditions to obtain a flat sheet polymer membrane; a flat sheet polymer membrane obtainable by the first method of the present invention; a second method of preparing a hollow fiber polymer membrane, the method comprising the steps of providing a polymer mixture according to the invention and applying conditions to form a hollow fiber polymer membrane; a hollow fiber polymer membrane obtainable by the second method; use of 3-alkyloxy-N,N-dialkylpropionamide as a solvent for the preparation of a flat sheet polymer membrane, a hollow fiber polymer membrane, a tubular membrane or a braded membrane.

### Description of the Figures

Figure 1a- An electron microscope image capture with a 100 μm scale showing the structure of a sheet membrane according to the present invention prepared with methoxy-N,N-dimethylpropionamide.

Figure 1b - An electron microscope image capture with a 100 μm scale showing the structure of a comparative sheet membrane prepared with N-methyl-2-pyrrolidone.

Figure 2a - A structure of the hollow fiber membrane under an electron microscope with a 1.00 mm scale.

Figure 2b - The structure of a comparative hollow fiber membrane under an electron microscope with a 1.00 mm scale.

Figure 3 - A diagram showing an exemplary spinning block (1) for producing a hollow fiber membrane.

### Detailed description of the invention

The present invention relates to a polymer solution comprising a polymer, water, optionally, an additive, and 3-alkyloxy-N,N-dialkylpropion amide.

According to the present invention, the polymer solution comprises a polymer.

The polymer in the solution may be of any suitable molecular weight. For example, the molecular weight of the polymer in the solution may be 0.1-1000 kDa.

The molecular weight of the polymer in the solution may be not more than 1000 kDa. The molecular weight of the polymer in the solution is preferably not more than 900 kDa. The molecular weight of the polymer in the solution is preferably not more than 750 kDa. The molecular weight of the polymer in the solution is preferably not more than 500 kDa.

The molecular weight of the polymer in the solution may be at least 1 kDa. The molecular weight of the polymer in the solution is preferably at least 1 kDa. The molecular weight of the polymer in the solution is preferably at least 10 kDa. The molecular weight of the polymer in the solution is preferably at least 100 kDa.

The polymer may be a hydrophilic or a hydrophobic polymer. Thus the polymer solution may comprise a hydrophilic or a hydrophobic polymer. Preferably, the solution comprises a hydrophilic and a hydrophobic polymer.

The polymer can preferably be a polyamideimide, polysulfone, polyimide, polyvinylidene fluoride or any mixture thereof.

Preferably, the polymer can be a polysulfone. Even more preferably, the polysulfone is selected from the group consisting of polysulfone (PSU), polyethersulfone (PES/PESU), polyphenylene sulfone (PPSU) and any copolymers or blends thereof. Even more preferably, the polymer is polyethersulfone. Polyethersulfone is preferably poly(oxy-1,4-phenylsulfonyl-1,4-phenyl) (CAS No. 25608-63-3).

Alternatively, the polymer can be a polyamideimide. The polyamideimide can be prepared from trimellitic acid-anhydride and isocyanates or diamines. The diamine may be 4,4'-Methylenedianiline diamine. The isocyanate may be 4,4'-Methylene diphenyl diisocyanate. A non-limiting example of a polyamideimide is Torlon 4000T (CAS: 42955-03-3, the monomers are trimellitic anhydride chloride, m-phenylenediamine and 4,40-oxydianiline).

Alternatively, the polymer can be polyvinylidene fluoride.

Alternatively, the polymer can be a polyimide. Preferably, the polyimide is selected from the group consisting of aliphatic polyimides, semi-aromatic polyimides, aromatic polyimides and any copolymers or blends thereof. A non-limiting example for polyimides is Matrimid 5218 (CAS No. 104983-64-4; the monomers are 3,3',4,4'-benzophenone tetracarboxylicdianhydride and diaminophenylindane).

The polymer can be present in the polymer solution present in amounts of not more than 40 wt.%, based on the total polymer solution. The polymer can be present in the polymer solution in amounts of not more than 35 wt.%, based on the total polymer solution. The polymer can preferably be present in amounts of not more than 30 wt.%, based on the total polymer solution. The polymer can preferably be present in amounts of not more than 27 wt.%, based on the total polymer solution. The polymer can preferably be present in amounts of not more than 23 wt.%, based on the total polymer solution.

The polymer can be present in the polymer solution in amounts of at least 5 wt.%, based on the total polymer solution. The polymer can preferably be present in amounts of at least 7 wt.%, based on the total polymer solution. The polymer can preferably be present in amounts of at least 10 wt.%, based on the total polymer solution. The polymer can preferably be present in amounts of at least 12 wt.%, based on the total polymer solution.

The polymer can be pre present in amounts from 5 to 40 wt.% based on the total polymer solution. The polymer can preferably be present in amounts from 7 to 35 wt.% based on the total polymer solution. The polymer can preferably be present in amounts from 10 to 30 wt.% based on the total polymer solution. The polymer can preferably be present in amounts from 12 to 27 wt.% based on the total polymer solution. The polymer can preferably be present in amounts from 16 to 22 wt.% based on the total polymer solution.

According to the present invention, the polymer solution comprises water.

In one embodiment, the water is present in amounts from 0.5 to 10 wt.%, based on the total polymer solution, preferably from 1 to 5 wt.%, more preferably from 2 to 4 wt.%, based on the total polymer solution.

The water can preferably be present in amounts of at least 1 wt.%, based on the total polymer solution. The water can preferably be present in amounts of at least 2 wt.%, based on the total polymer solution. The water can preferably be present in amounts of at least 4 wt.%, based on the total polymer solution.

The water can preferably be present in amounts of not more than 8 wt.%, based on the total polymer solution. The water can preferably be present in amounts of not more than 6 wt.%, based on the total polymer solution. The water can preferably be present in amounts of not more than 5 wt.%, based on the total polymer solution.

The water can preferably be present in amounts from 2 to 8 wt.%, based on the total polymer solution. The water can preferably be present in amounts from 4 to 6 wt.%, based on the total polymer solution.

The water can preferably be present in an amount of 2 wt.%, based on the total polymer solution. The water can preferably be present in an amount of 3 wt.%, based on the total polymer solution. The water can preferably be present in an amount of 4 wt.%, based on the total polymer solution. The water can preferably be present in an amount of 5 wt.%, based on the total polymer solution.

According to the present invention, the polymer solution can comprise at least one additive.

The at least one additive may be any functional additive that is able to influence the rheological properties of the polymer solution. The additive, when present in effective amounts, can have the ability to affect the rheological properties of the polymer solution. The rheological properties influenced are preferably selected from viscosity, elasticity, viscoelasticity, shear rate, yield stress and/or dynamic modulus. The at least one additive may improve the dispersibility of the solution. Thus, the at least one additive may be a surfactant or a dispersant.

The additive of the polymer solution can be selected from the group comprising polyvinylpyrrolidone, polyacrylates, surfactants, dispersants, poly glycols and any mixture thereof.

The additive of the polymer solution can be selected from the group comprising polyvinylpyrrolidone, polyethylene glycol, polymethylmethacrylate, glycerin, vinylpyrrolidone/vinylacetate copolymers, vinylcaprolactam/vinylpyrrolidone-dimethylamino-propylmethylacrylamide terpolymers, polyethylene glycol polyester copolymers, sodium chloride, calcium chloride, magnesium chloride, ethylene oxide/propylene block copolymer, poly(ethyleneimine), surfactants and any mixture thereof.

The polyvinylpyrrolidone may be characterized by the K value. The K value represents the viscosity of a polymeric solution which in turn depends on the degree of polymerization. The K value can be for example calculated using the Fikentscher's equation.

It is to be understood that the term "polyvinylpyrrolidone K30" as used herein refers to a polyvinylpyrrolidone having a K value of 27.0 to 33.0. It is further to be understood that the term "polyvinylpyrrolidone K90" as used herein refers to a polyvinylpyrrolidone having a K value of 81.0 to 97.5. In particular, the PVP K30 has a K Value from 27-32.4 and a molecular weight of about 40.000 g/mol. The PVPK90 has a K Value of 81.0-97.2 and a molecular weight of 900.000-1.200.000 g/mol.

In one embodiment, the at least one additive is polyvinylpyrrolidone, having a K value from 10.0 to 95.0. In another embodiment, the at least one additive is polyvinylpyrrolidone, having a K value from 20.0 to 90.0. In another embodiment, the at least one additive is polyvinylpyrrolidone, having a K value from 30.0 to 90.0.

In a certain embodiment, the polyvinylpyrrolidone has a K value of 20.0 to 40.0, preferably 25.0 to 35.0. In a certain embodiment, the polyvinylpyrrolidone is polyvinylpyrrolidone K30. In another certain embodiment, the polyvinylpyrrolidone has a K value of 75.0 to 99.0, preferably 80.0 to 95.0.In a certain embodiment, the polyvinylpyrrolidone is polyvinylpyrrolidone K90.

In a certain embodiment, the polyvinylpyrrolidone is a mixture of polyvinylpyrrolidone having a K value of K30 and polyvinylpyrrolidone having a K value of K90.

In one embodiment, the ratio of polyvinylpyrrolidone K30 and polyvinylpyrrolidone K90 is from 1:0.2 to 1:5. In another embodiment, the ratio of polyvinylpyrrolidone K30 and polyvinylpyrrolidone K90 is from 1:0.4 to 1:3.In another embodiment, the ratio of polyvinylpyrrolidone K30 and polyvinylpyrrolidone K90 is from 1:0.5 to 1:3. In another embodiment, the ratio of polyvinylpyrrolidone K30 and polyvinylpyrrolidone K90 is from 1:0.7 to 1:2. In a certain embodiment, the ratio of polyvinylpyrrolidone K30 and polyvinylpyrrolidone K90 is 1:1.

It is to be understood that the certain weight amounts of the at least one additive as disclosed herein below do equally preferable quantify one single additive or the total amount of additives added. Thus, these amounts may be selected for each single additive present in the polymer solution independently. The related amounts may also represent the total amount of additives present in the polymer solution.

Thus, in one embodiment, the additive is present in amounts from 0.5 to 20 wt.%, preferably from 1 to 15 wt.%, more preferably from 2 to 12 wt.%, based on the total polymer solution. In a certain embodiment, the additive is present in amounts from 2 to 10 wt.%, based on the total polymer solution. In another certain embodiment, the additive is present in amounts from 2 to 8 wt.%, based on the total polymer solution.

The additive can preferably be present in amounts of no more than 18 wt.%, based on the total polymer solution. The additive can preferably be present in amounts no more than 16 wt.% based on the total polymer solution. The additive can preferably be present in amounts no more than 14 wt.%, based on the total polymer solution. The additive can preferably be present in amounts no more than 12 wt.%, based on the total polymer solution. The additive can preferably be present in amounts no more than 10 wt.%, based on the total polymer solution.

The additive can preferably be present in amounts of at least 1 wt.%, based on the total polymer solution. The additive can preferably be present in amounts at least 2 wt.%, based on the total polymer solution. The additive can preferably be present in amounts at least 4 wt.%, based on the total polymer solution. The additive can preferably be present in amounts at least 6 wt.%, based on the total polymer solution. The additive can preferably be present in amounts at least 8 wt.%, based on the total polymer solution. The additive can preferably be present in amounts at least 10 wt.%, based on the total polymer solution.

The additive can preferably be present in amounts from 1 to 18 wt.%, based on the total polymer solution. The additive can preferably be present in amounts from 2 to 16 wt.%, based on the total polymer solution. The additive can preferably be present in amounts from 4 to 14 wt.%, based on the total polymer solution. The additive can preferably be present in amounts from 5 to 12 wt.%, based on the total polymer solution. The additive can preferably be present in amounts from 8 to 10 wt.%, based on the total polymer solution.

According to the present invention, the polymer solution comprises 3-alkyloxy-N,N-dialkylpropionamide, wherein the alkyl groups are independently selected from alkyl groups having 1, 2 or 3 carbon atoms .

Examples of suitable 3-alkyloxy-N,N-dialkylpropionamide compounds include 3-n-propoxy-N,N-di-n-propylpropionamide, 3-iso-propoxy-N,N-di-iso-propylpropionamide, 3-ethoxy-N,N-di-n-propylpropionamide, 3-ethoxy-N,N-di-iso-propylpropionamide, 3-methoxy-N,N-di-n-propylpropionamide, 3-methoxy-N,N-di-iso-propylpropionamide, 3-n-propoxy-N,N-diethylpropionamide, 3-iso-propoxy-N,N-diethylpropionamide, 3-n-propoxy-N,N-dimethylpropionamide, 3-iso-propoxy-N,N-dimethylpropionamide, 3-ethoxy-N,N-di-ethylpropionamide, 3-ethoxy-N,N-dimetylpropionamide, 3-methoxy-N,N-diethylpropionamide, and 3-methoxy-N,N-dimethylpropionamide.

A preferred diluent is 3-methoxy-N,N-dimethylpropionamide.

3-alkyloxy-N,N-dialkylpropionamide is used to dissolve membrane polymers. Such a solution can be treated with a non-solvent to initiate a coagulation process in which a polymer sheet or a hollow fiber with defined porous structure and pore size gradient is formed. The polymer sheet or hollow fiber can be used as separation membrane.

The separation membranes obtained from the membrane polymers dissolved in 3-alkyloxy-N,N-dialkylpropionamide show a higher permeability while maintaining a similar retention compared to a separation membrane derived from polymer solutions prepared with N-methyl-2-pyrrolidone. Moreover, flatsheet membranes of the present invention could be used to efficiently separate gases, in particular $CO_2$.

In one embodiment, the 3-alkyloxy-N,N-dialkylpropionamide is present in amounts from 30 to 94 wt.%, preferably from 50 to 88 wt.%, more preferably from 59 to 84 wt.%, based on the total polymer solution.

The 3-alkyloxy-N,N-dialkylpropionamide can preferably be present in amounts of no more than 94 wt.%, based on the total polymer solution. The 3-alkyloxy-N,N-dialkylpropionamide can preferably be present in amounts of no more than 90 wt.%, based on the total polymer solution. The 3-alkyloxy-N,N-dialkylpropionamide can preferably be present in amounts of no more than 88 wt.%, based on the total polymer solution. The 3-alkyloxy-N,N-dialkylpropionamide can preferably be present in amounts of no more than 84 wt.%, based on the total polymer solution. The 3-alkyloxy-N,N-dialkylpropionamide can preferably be present in amounts of no more than 80 wt.%, based on the total polymer solution.

The 3-alkyloxy-N,N-dialkylpropionamide can preferably be present in amounts of at least 30 wt.%, based on the total polymer solution. The 3-alkyloxy-N,N-dialkylpropionamide can preferably be present in amounts of at least 35 wt.%, based on the total polymer solution. The -methoxy-N,N-dimethyl-propionamide can preferably be present in amounts of at least 40 wt.%, based on the total polymer solution. The 3-alkyloxy-N,N-dialkylpropionamide can preferably be present in amounts of at least 50 wt.%, based on the total polymer solution. The 3-alkyloxy-N,N-dialkylpropionamide can preferably be present in amounts of at least 55 wt.%, based on the total polymer solution. The 3-alkyloxy-N,N-dialkylpropionamide can preferably be present in amounts of at least 59 wt.%, based on the total polymer solution.

The polymer solution can have any viscosity that allows its use in the formation of a flat sheet membrane or a hollow fiber membrane.

The polymer solution of the present invention shows a non-Newtonian behavior with its viscosity being dependent from the shear strain applied. The viscosity of the polymer solution can be determined according to the international standard ISO 2555 - 2018-09, preferably at 25°C. In particular the viscosity of the polymer solution as referred to in the present invention was measured with an Anton Paar MCR 302e Rheometer equipped with a cone-plate CP25-0.5 measuring system at 25°C and the shear rate was increased in a logarithmic ramp from 0.1 to 150 1/s in 210 s.

In one embodiment, the polymer solution has a viscosity of 5 to 200 Pa * s .

The polymer solution can preferably have a viscosity of no more than 200 Pa * s. The polymer solution can preferably have a viscosity of no more than 180 Pa * s. The polymer solution can preferably have a viscosity of no more than 160 Pa * s. The polymer solution can preferably have a viscosity of no more than 140 Pa * s. The polymer solution can preferably have a viscosity of no more than 120 Pa * s. The polymer solution can preferably have a viscosity of no more than 100 Pa * s. The polymer solution can preferably have a viscosity of no more than 90 Pa * s. The polymer solution can preferably have a viscosity of no more than 80 Pa * s. The polymer solution can preferably have a viscosity of no more than 70 Pa * s. The polymer solution can preferably have a viscosity of no more than 60 Pa * s. The polymer solution can preferably have a viscosity of no more than 50 Pa * s. The polymer solution can preferably have a viscosity of no more than 45 Pa * s. The polymer solution can preferably have a viscosity no more than 40 Pa * s. The polymer solution can preferably have a viscosity of no more than 35 Pa * s. The polymer solution can preferably have a viscosity of no more than 30 Pa * s.

The polymer solution can preferably have a viscosity of at least 10 Pa * s. The polymer solution can preferably have a viscosity of at least 15 Pa * s. The polymer solution can preferably have a viscosity of at least 20 Pa * s. The polymer solution can preferably have a viscosity of at least 25 Pa * s. The polymer solution can preferably have a viscosity of at least 30 Pa * s. The polymer solution can preferably have a viscosity of at least 35 Pa * s. The polymer solution can preferably have a viscosity of at least 40 Pa * s. The polymer solution can preferably have a viscosity of at least 45 Pa * s. The polymer solution can preferably have a viscosity of at least 50 Pa * s. The polymer solution can preferably have a viscosity of at least 60 Pa * s. The polymer solution can preferably have a viscosity of at least 70 Pa * s. The polymer solution can preferably have a viscosity of at least 80 Pa * s. The polymer solution can preferably have a viscosity of at least 90 Pa * s. The polymer solution can preferably have a viscosity of at least 100 Pa * s. The polymer solution can preferably have a viscosity of at least 120 Pa * s. The polymer solution can preferably have a viscosity of at least 140 Pa * s. The polymer solution can preferably have a viscosity of at least 160 Pa * s. The polymer solution can preferably have a viscosity of at least 180 Pa *.

The polymer solution can preferably have a viscosity of 5 to 200 Pa *. The polymer solution can preferably have a viscosity of 10 to 180 Pa * s. The polymer solution can preferably have a viscosity of 30 to 160 Pa * s. The polymer solution can preferably have a viscosity of 40 to 140 Pa *. The polymer solution can preferably have a viscosity of 50 to 120 Pa * s. The polymer solution can preferably have a viscosity of 60 to 100 Pa * s. The polymer solution can preferably have a viscosity of 70 to 90 Pa * s. The polymer solution can preferably have a viscosity of 10 to 45 Pa *. The polymer solution can preferably have a viscosity of 15 to 40 Pa * s. The polymer solution can preferably have a viscosity of 20 to 35 Pa * s. The polymer solution can preferably have a viscosity of 25 to 30 Pa * s.

The present invention also relates to a method for preparing a flat sheet polymer membrane, the method comprising the steps of:

**EP 4 674 515 A1**

- providing a polymer solution as described herein above,
- applying conditions to obtain a flat sheet polymer membrane.

According to the invention, the method comprises the step of providing a polymer solution as described herein above.

The polymer solution can preferably be obtained by dissolving a polymer as defined herein above in 3-alkyloxy-N,N-dialkylpropion amide. The polymer solution can preferably be degassed before further processing. The polymer solution can preferably be filtered before further processing. The polymer solution can preferably comprise at least one additive as defined herein above.

Thereby, it is herein understood that the manufacturing of a membrane according to the invention follows a phase inversion process. Such phase inversion processes are known in the art.

According to the invention, the method comprises the step of applying conditions to obtain a flat sheet polymer membrane.

In one embodiment, the conditions to obtain a flat sheet polymer membrane comprise the step of:

- forming a film of the polymer mixture from the polymer solution on a substrate.

The substrate can preferably be a woven polymeric support layer, a non-woven polymeric support layer, a dense polymeric support layer, a metal plate or a glass plate.

In one embodiment, the film of the polymer on the substrate is formed by adding a non-solvent to the polymer mixture, preferably water.

In one embodiment, the non-solvent is selected from the group consisting of water, alcohols, acetone and any mixture thereof.

In a certain embodiment, the non-solvent is a mono alcohol, preferably selected from the group consisting of methanol, ethanol, propanol, isopropanol, butanol, isobutanol, secbutanol, isoamyl alcohol, pentanol, 2-methyl-1-butanol, hexanol, 2-methyl-1-pentanol, 3-methyl-1-butanol, 3-methyl-2-butanol, 2-methyl-2-butanol and any mixture thereof.

In a certain embodiment, the non-solvent is a diol, preferably selected from the group consisting of ethylene glycol, propylene glycol, 1,3-butanediol, 1,4-butanediol, hexanediol and any mixture thereof.

In a certain embodiment, the non-solvent is a triol, preferably selected from the group consisting of ethylene glycerol, propylene glycerol, 1,2,3-propanetriol, 1,2,4-butanetriol, 1,2,6-hexanetriol and any mixture thereof.

In a certain embodiment, the non-solvent is glycerin.

It is to be understood that the mono alcohols, diols and triols can be used in any mixture with water.

In one embodiment, the non-solvent is a mixture of water and a solvent selected from the group consisting of alcohols, acetone and any mixture thereof.

In a certain embodiment, the alcohols may be selected from the mono alcohols, diols and triols as defined above.

Preferably, the conditions to obtain a flat sheet polymer membrane comprising the step of:

- precipitating the polymer on the substrate by adding a suitable amount of non-solvent to the polymer solution.

In one embodiment, is precipitated on the substrate by removing the solvent. In a further embodiment, the solvent is removed by evaporation. In a certain embodiment, the solvent is removed by evaporation under vacuum.

Preferably, the conditions to obtain a flat sheet polymer membrane comprising the step of:

- precipitating the polymer on the substrate by removing the solvent of the polymer solution.

It is to be understood that the amount of non-solvent is suitable if the polymer starts precipitating on the substrate. Precipitation of the polymer can be determined by methods known in the art, such as cloud point determination or microscopy.

In one embodiment, the conditions to obtain a flat sheet polymer membrane further comprising the step of:

- subjecting the polymeric membrane obtained from precipitation of the polymer on the substrate to at least one washing bath.

In one embodiment, the conditions to obtain a flat sheet polymer membrane further comprising the step of:

- removing the flat sheet membrane from the substrate.

In one embodiment, the conditions to obtain a flat sheet polymer membrane comprising the step of:

- drying the polymeric membrane obtained from precipitation of the polymer on the substrate , preferably by heating.

The present invention also relates to a flatsheet polymer membrane obtainable by the method as described herein above.

The flatsheet polymer membrane obtainable by the method as described herein above has a high permeability which allows a faster application process.

In one embodiment, the flatsheet polymer membrane has a permeability of at least 100 LMH/bar. In another embodiment, the flatsheet polymer membrane has a permeability of at least 200 LMH/bar. In another embodiment, the flatsheet polymer membrane has a permeability of at least 300 LMH/bar. In another embodiment, the flatsheet polymer membrane has a permeability of at least 400 LMH/bar. In another embodiment, the flatsheet polymer membrane has a permeability of at least 500 LMH/bar. In another embodiment, the flatsheet polymer membrane has a permeability of at least 600 LMH/bar. In another embodiment, the flatsheet polymer membrane has a permeability of at least 700 LMH/bar. In another embodiment, the flatsheet polymer membrane has a permeability of at least 800 LMH/bar. In another embodiment, the flatsheet polymer membrane has a permeability of at least 1000 LMH/bar. In another embodiment, the flatsheet polymer membrane has a permeability of at least 1200 LMH/bar. In another embodiment, the flatsheet polymer membrane has a permeability of at least 1000 LMH/bar. In another embodiment, the flatsheet polymer membrane has a permeability of at least 1200 LMH/bar. In another embodiment, the flatsheet polymer membrane has a permeability of at least 1400 LMH/bar. In another embodiment, the flatsheet polymer membrane has a permeability of at least 1600 LMH/bar. In another embodiment, the flatsheet polymer membrane has a permeability of at least 1800 LMH/bar. In another embodiment, the flatsheet polymer membrane has a permeability of at least 2000 LMH/bar.

In one embodiment, the flatsheet polymer membrane has a permeability of up to 2500 LMH/bar. In another embodiment, the flatsheet polymer membrane has a permeability of up to 2200 LMH/bar. In one embodiment, the flatsheet polymer membrane has a permeability of up to 2000 LMH/bar. In another embodiment, the flatsheet polymer membrane has a permeability of up to 1800 LMH/bar. In another embodiment, the flatsheet polymer membrane has a permeability of up to 1600 LMH/bar. In another embodiment, the flatsheet polymer membrane has a permeability of up to 1500 LMH/bar. In another embodiment, the flatsheet polymer membrane has a permeability of up to 1400 LMH/bar. In another embodiment, the flatsheet polymer membrane has a permeability of up to 1200 LMH/bar. In another embodiment, the flatsheet polymer membrane has a permeability of up to 1000 LMH/bar. In another embodiment, the flatsheet polymer membrane has a permeability of up to 900 LMH/bar. In another embodiment, the flatsheet polymer membrane has a permeability of up to 800 LMH/bar. In another embodiment, the flatsheet polymer membrane has a permeability of up to 700 LMH/bar. In another embodiment, the flatsheet polymer membrane has a permeability of up to 600 LMH/bar. In another embodiment, the flatsheet polymer membrane has a permeability of up to 500 LMH/bar.

In one embodiment, the flatsheet polymer membrane has a permeability of 100 - 2500 LMH/bar. In a further embodiment, the flatsheet polymer membrane has a permeability of 200 - 2200 LMH/bar. In a further embodiment, the flatsheet polymer membrane has a permeability of 300 - 2000 LMH/bar. In a further embodiment, the flatsheet polymer membrane has a permeability of 400 - 1800 LMH/bar. In a further embodiment, the flatsheet polymer membrane has a permeability of 400 - 1600 LMH/bar. In a further embodiment, the flatsheet polymer membrane has a permeability of 400 - 1500 LMH/bar. In a further embodiment, the flatsheet polymer membrane has a permeability of 400 - 1400 LMH/bar. In a further embodiment, the flatsheet polymer membrane has a permeability of 400 - 1200 LMH/bar. In a further embodiment, the flatsheet polymer membrane has a permeability of 200 - 1000 LMH/bar. In a further embodiment, the flatsheet polymer membrane has a permeability of 200 - 800 LMH/bar. In a further embodiment, the flatsheet polymer membrane has a permeability of 300 - 600 LMH/bar.

The pure water permeability is evaluated in dead-end filtration mode using a volumetric method. Deionized water permeates the wet membranes for 15 min at 1.0 bar transmembrane pressure and the permeate is collected for volume measurement.

The pure water permeability $P_{PWP}$ (L/(m$^2$ h bar)) is expressed as

$$P_{PWP} = \frac{V_{Permeate}}{A_{Membrane} \cdot p_{TMP} \cdot t} \qquad \text{formula (I)}$$

with the permeate volume $V_{Permeate}$ [L], active membrane surface area $A_{Membrane}$ [m$^2$], transmembrane pressure $p_{TMP}$ [bar] and permeation time $t$ [h].

$$\text{PWP} \left[\frac{L}{m^2 \cdot h \cdot bar}\right] = \frac{\dot{V}_w}{A_M \cdot \Delta\rho} \text{ formula (I)}$$

In formula (I), $V_w$ is the volume flow of the water, $A_M$ is the membrane area and $\Delta\rho$ is the transmembrane pressure.

In one embodiment, the flatsheet polymer membrane has a retention of 70-95% for 100 kDa polyethylene glycol. In another embodiment, the flatsheet polymer membrane has a retention of 75-95% for 100 kDa polyethylene glycol. In another embodiment, the flatsheet polymer membrane has a retention of 80-95% for 100 kDa polyethylene glycol. In another embodiment, the flatsheet polymer membrane has a retention of 85-95% for 100 kDa polyethylene glycol. In another embodiment, the flatsheet polymer membrane has a retention of 90-95% for 100 kDa polyethylene glycol.

A solution consisting of 1 g/L 100 kDa PEG is used to measure solute retention. The solution is fed in cross-flow through the membrane, and the permeate is collected after defined periods for a total of 3 h. The refractive index of the permeate and feed solution is measured using an Abbemat Performance Plus Refractometer 550 from Anton Paar, and the concentrations is calculated with a previously obtained calibration curve.

The retention R is determined by the following formula (II):

$$R = 1 - \frac{c_{permeate}}{c_{feed}} \quad \text{formula (II)}$$

With $c_{permeate}$ and $c_{feed}$ as the PEG concentration of permeate and feed solutions, respectively.

The present invention also relates to a method of preparing a hollow fiber polymer membrane, the method comprising the steps of:

- providing a polymer solution as described herein above,
- applying conditions to form a hollow fiber polymer membrane.

In one embodiment, the conditions to form a hollow fiber polymer membrane comprising the step of:

- forming the polymer membrane in a spinning block.

It is to be understood that the conditions to form a hollow fiber polymer membrane also include the conditions to form a polymer membrane in the spinning block.

The polymeric membrane is formed by passing the polymer solution (dope) together with a precipitating solution (bore fluid) through a spinneret within the spinning block to form the polymeric hollow fiber membrane. The polymer solution is one according to the present invention as described above.

In one embodiment, the polymer solution comprises a polymer. In a certain embodiment the wt. amount of the polymer is as defined above.

In another embodiment, the polymer solution comprises water. In a certain embodiment the wt. amount of the water is as defined above.

In another embodiment, the polymer solution comprises a fist additive. In a certain embodiment the wt. amount of the fist additive is as defined above.

In another embodiment, the polymer solution comprises a second additive. In a certain embodiment the wt. amount of the second additive is as defined above for any additive. The second additive may be different from the first additive.

In a further embodiment, the polymer solution comprises a polymer as defined above, a first additive, a second additive and water.

In another embodiment, the polymer solution comprises a polysulfone as defined above, polyvinylpyrrolidone having a K value of K30, polyvinylpyrrolidone having a K value of K90 and water.

In a certain embodiment, the polymer solution comprises 10-30 wt.% of a polysulfone as defined above, 2-10 wt.% of polyvinylpyrrolidone having a K value of 30, 0.5-5.0 wt.% polyvinylpyrrolidone having a K value of 90 and 1-5 wt.% water, each based on the total weight of the polymer solution. Preferably, the polysulfone is polyethersulfone.

In a certain embodiment, the polymer solution comprises 15-25 wt.% of a polysulfone as defined above, 3-6 wt.% of polyvinylpyrrolidone having a K value of 30, 1-3 wt.% polyvinylpyrrolidone having a K value of 90 and 2-4 wt.% water, each based on the total weight of the polymer solution. Preferably, the polysulfone is polyethersulfone.

In one embodiment, the conditions to form polymer membrane in the spinning block a hollow fiber polymer membrane further comprising the step of:

- subjecting the polymeric mixture to at least one precipitation bath comprising at least one non-solvent.

It is to be understood that the amount of non-solvent in the precipitation bath is suitable to precipitate the polymer from the solution. The amount of non-solvent in the precipitation bath is suitable if the polymer starts precipitating. Precipitation of the polymer can be determined by methods known in the art such as cloud point analysis, visual analysis or microscopical analysis.

In a further embodiment, the precipitation bath consists of at least one non-solvent.

In one embodiment, the non-solvent is selected from the group consisting of water, alcohols, acetone and any mixture thereof.

In a certain embodiment, the non-solvent is a mono alcohol, preferably selected from the group consisting of methanol, ethanol, propanol, isopropanol, butanol, isobutanol, secbutanol, isoamyl alcohol, pentanol, 2-methyl-1-butanol, hexanol, 2-methyl-1-pentanol, 3-methyl-1-butanol, 3-methyl-2-butanol, 2-methyl-2-butanol and any mixture thereof.

In a certain embodiment, the non-solvent is a diol, preferably selected from the group consisting of ethylene glycol, propylene glycol, 1,3-butanediol, 1,4-butanediol, hexanediol and any mixture thereof.

In a certain embodiment, the non-solvent is a triol, preferably selected from the group consisting of ethylene glycerol, propylene glycerol, 1,2,3-propanetriol, 1,2,4-butanetriol, 1,2,6-hexanetriol and any mixture thereof.

In a certain embodiment, the non-solvent is glycerin.

It is to be understood that the mono alcohols, diols and triols can be used in any mixture with water.

In one embodiment, the non-solvent is a mixture of water and a solvent selected from the group consisting of alcohols, acetone and any mixture thereof.

In a certain embodiment, the alcohols may be selected from the mono alcohols, diols and triols as defined above. In a certain embodiment, the non-solvent is water.

In one embodiment, the bore fluid comprises one or more 3-alkyloxy-N,N-dialkylpropionamide compounds. In another embodiment, the bore fluid comprises a mixture of one or more 3-alkyloxy-N,N-dialkylpropionamidecompounds and water. In another embodiment, the bore fluid comprises a mixture of one or more 3-alkyloxy-N,N-dialkylpropionamide compounds and an alcohol, preferably glycerin.

In one embodiment, the amount of 3-alkyloxy-N,N-dialkylpropionamide in the bore fluid is up to 75 wt.% of the total weight of the composition. In another embodiment, the amount of 3-alkyloxy-N,N-dialkylpropionamide in the bore fluid is up to 70 wt.% of the total weight of the composition. In one embodiment, the amount of 3-alkyloxy-N,N-dialkylpropionamide in the bore fluid is up to 65 wt.% of the total weight of the composition. In one embodiment, the amount of 3-alkyloxy-N,N-dialkylpropionamide in the bore fluid is up to 60 wt.% of the total weight of the composition. In one embodiment, the amount of 3-alkyloxy-N,N-dialkylpropionamide in the bore fluid is up to 55 wt.% of the total weight of the composition. In one embodiment, the amount of 3-alkyloxy-N,N-dialkylpropionamide in the bore fluid is up to 50 wt.% of the total weight of the composition. In one embodiment, the amount of 3-alkyloxy-N,N-dialkylpropionamide in the bore fluid is up to 45 wt.% of the total weight of the composition. In one embodiment, the amount of 3-alkyloxy-N,N-dialkylpropionamide in the bore fluid is up to 40 wt.% of the total weight of the composition. In one embodiment, the amount of 3-alkyloxy-N,N-dialkylpropionamide in the bore fluid is up to 35 wt.% of the total weight of the composition. In one embodiment, the amount of 3-alkyloxy-N,N-dialkylpropionamide in the bore fluid is up to 30 wt.% of the total weight of the composition.

In one embodiment, the amount of water is up to 50 wt.% of the total weight of the composition. In another embodiment, the amount of water is up to 45 wt.% of the total weight of the composition. In another embodiment, the amount of water is up to 40 wt.% of the total weight of the composition. In another embodiment, the amount of water is up to 35 wt.% of the total weight of the composition. In another embodiment, the amount of water is up to 30 wt.% of the total weight of the composition. In another embodiment, the amount of water is up to 25 wt.% of the total weight of the composition. In another embodiment, the amount of water is up to 20 wt.% of the total weight of the composition. In another embodiment, the amount of water is up to 15 wt.% of the total weight of the composition. In another embodiment, the amount of water is up to 10 wt.% of the total weight of the composition.

In one embodiment, the amount of alcohol is up to 50 wt.% of the total weight of the composition. In another embodiment, the amount of alcohol is up to 45 wt.% of the total weight of the composition. In another embodiment, the amount of alcohol is up to 40 wt.% of the total weight of the composition. In another embodiment, the amount of alcohol is up to 35 wt.% of the total weight of the composition. In another embodiment, the amount of alcohol is up to 30 wt.% of the total weight of the composition. In another embodiment, the amount of alcohol is up to 25 wt.% of the total weight of the composition. In another embodiment, the amount of alcohol is up to 20 wt.% of the total weight of the composition. In another embodiment, the amount of alcohol is up to 15 wt.% of the total weight of the composition. In another embodiment, the amount of alcohol is up to 10 wt.% of the total weight of the composition.

In another embodiment the bore fluid consists of a mixture of 3-alkyloxy-N,N-dialkylpropion amide, water and glycerin.

In one embodiment, the bore fluid consists of a mixture of 25-75 wt.% 3-alkyloxy-N,N-dialkylpropionamide compounds , 10-40 wt.% water and 10-40 wt.% glycerin, each of the total weight of the composition. In another embodiment, the bore fluid consists of a mixture of 40-60 wt.% 3-alkyloxy-N,N-dialkylpropionamide compounds , 15-35 wt.% water and 15-35 wt.% glycerin, each of the total weight of the composition. In another embodiment, the bore fluid consists of a mixture of 45-55 wt.% 3-alkyloxy-N,N-dialkylpropionamide compounds, 20-30 wt.% water and 20-30 wt.% glycerin, each of the total weight of the composition. In a certain embodiment, the bore fluid consists of a mixture of 50 wt.% 3-alkyloxy-N,N-dialkylpropionamide compounds , 25 wt.% water and 25 wt.% glycerin, each of the total weight of the composition.

In a further embodiment, the conditions to form a hollow fiber polymer membrane further comprises the step of:

- subjecting the polymeric membrane to at least one washing bath after precipitation.

In yet another embodiment, the conditions to form a hollow fiber polymer membrane further comprises the step of:

- drying the hollow membrane, preferably by heating.

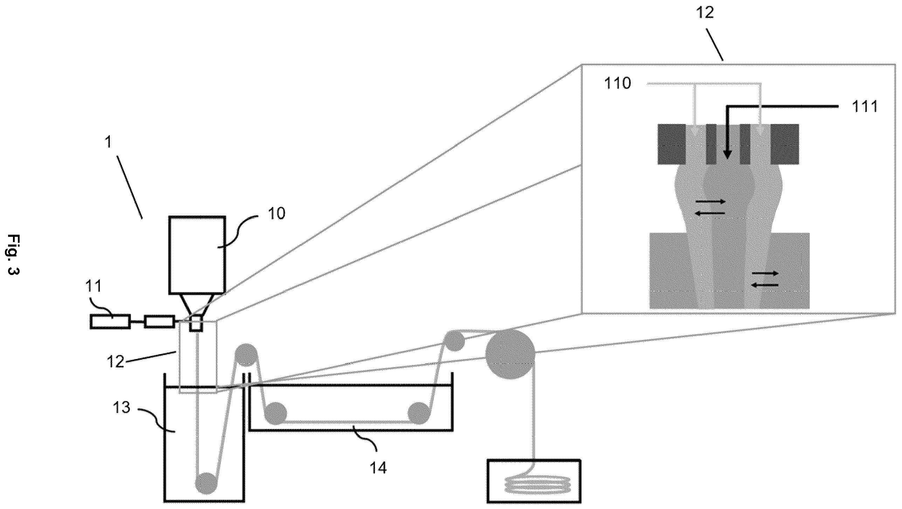

Figure 3 schematically shows an exemplary spinning block (1) for the preparation of hollow fibers according to the present invention. The spinning block (1) has a first reservoir (10) for the dope or polymer solution (110), a second reservoir (11) for the precipitating solution or bore fluid (111), a duct for the dope (110) and a hollow core through which the bore fluid (111) passes. Both the duct and the hollow core form the spinneret (12). The dope (110) and the bore fluid (111) are simultaneously fed to the spinneret (12). The dope (110) is precipitated within the coagulation bath (13). The resulting precipitate is washed in the washing bath (14). The precipitate is leaving the spinning block (1) as wet hollow fibers. The wet hollow fibers could be further subjected to a drying step.

Thus, in one specific embodiment, the process for preparing the hollow fiber membrane of the invention is consisting of subjecting the polymer solution of the present invention to a spinning block (1) comprising a spinneret (12). the polymer solution of the present invention and a non-solvent are simultaneously fed to the spinneret (12). The polymer solution of the present invention is precipitated within the coagulation bath (13). The resulting precipitate is washed in the washing bath (14). The precipitate is leaving the spinning block (1) as wet hollow fibers. The wet hollow fibers are dried in a drying chamber.

The invention also relates to a hollow fiber polymer membrane obtainable by the method as described herein above.

In one embodiment, the hollow fiber polymer membrane has a permeability in ultrafiltration range of $350 \pm 21$ LMH/bar.

The pure water permeability is determined as defined above with respect to the flatsheet polymer membrane.

The hollow fiber polymer membrane obtainable by the method as described herein above has a high permeability, which allows a faster application process.

In one embodiment, the hollow fiber polymer membrane has a permeability of at least 100 LMH/bar. In another embodiment, the hollow fiber polymer membrane has a permeability of at least 150 LMH/bar. In another embodiment, the hollow fiber polymer membrane has a permeability of at least 200 LMH/bar. In another embodiment, the hollow fiber polymer membrane has a permeability of at least 250 LMH/bar. In another embodiment, the hollow fiber polymer membrane has a permeability of at least 300 LMH/bar.

In one embodiment, the hollow fiber polymer membrane has a permeability of up to 450 LMH/bar. In another embodiment, the hollow fiber polymer membrane has a permeability of up to 400 LMH/bar. In one embodiment, the hollow fiber polymer membrane has a permeability of up to 350 LMH/bar. In another embodiment, the hollow fiber polymer membrane has a permeability of up to 300 LMH/bar. In another embodiment, the hollow fiber polymer membrane has a permeability of up to 250 LMH/bar.

In one embodiment, the hollow fiber membrane has a permeability of 100 - 450 LMH/bar. In a further embodiment, the hollow fiber polymer membrane has a permeability of 150 - 400 LMH/bar. In a further embodiment, the hollow fiber polymer membrane has a permeability of 200 - 350 LMH/bar.

In one embodiment, the hollow fiber polymer membrane has a retention of 70-95%. In another embodiment, the hollow fiber polymer membrane has a retention of 75-95% for 100 kDa polyethylene glycol. In another embodiment, the hollow fiber polymer membrane has a retention of 80-95% for 100 kDa polyethylene glycol. In another embodiment, the hollow fiber polymer membrane has a retention of 85-95% for 100 kDa polyethylene glycol. In another embodiment, the hollow fiber polymer membrane has a retention of 90-95% for 100 kDa polyethylene glycol.

The retention of the hollow fiber membrane is determined as described above for the flatsheet membrane. The present invention also relates to use of 3-alkyloxy-N,N-dialkylpropionamide as a solvent for the preparation of a flat sheet polymer membrane, a hollow fiber polymer membrane, a tubular membrane or a braded membrane.

It is to be understood, that the embodiments and advantages disclosed with respect to the polymer solution, the flat sheet polymer membrane, the hollow fiber polymer membrane, the methods for producing them and the use of 3-alkyloxy-N,N-dialkylpropionamide are applicable for any aspect of the present invention.

## Examples

The following examples further illustrate the invention but should not be construed as limiting its scope.
The following materials have been used in the Examples:

Table 1:

| Component | Specification | Supplier |
|---|---|---|
| polyethersulfone (PES) | Ultrason ® E 6020 P | BASF |
| PVP K30 (Polyvinylpyrrolidon) | CAS No: 9003-39-8 | Carl Roth |
| PVP K90 (Polyvinylpyrrolidon) | CAS No: 9003-39-8 | Carl Roth |
| PEG 100 | - | Carl Roth |
| N-methylpyrrolidone (NMP) | 99 % | Thermo Fisher |
| 3-alkyloxy-N,N-dialkylpropionamide (NDM) | Thinner GE | Elantas |
| NaOCl | 12 % in aq. solution | Carl Roth |
| Glycerol | 99.5 % | Chemidiscount |
| Matrimid | Matrimid 5218 US CAS No 104983-64-4 | Huntsman |

Example 1: Preparation of polymer solutions

3-methoxy-N,N-dimethylpropionamide (NDM) was placed in a container, then subsequently polyethersulfone (PES), additives and water were added to the container with stirring at 60 °C and the resulting mixture was stirred over night at 60 °C.
In Table 2, detailed information is provided for the required amounts of PES and additives are provided, the amounts are given in wt% of the total weight of the solution.

Table 2

| Sample | PES (wt%) | PVP K30 (wt%) | PVP K90 (wt%) | Water (wt%) | Solvent | Solvent (wt%) |
|---|---|---|---|---|---|---|
| NDM-1 | 14 | 5 | 2 | 3 | NDM | 76 |
| NDM-2 | 20 | 5 | 2 | 3 | NDM | 70 |
| NDM-3 | 25 | 5 | 2 | 3 | NDM | 65 |
| NDM-4 | 20 | 8 | 2 | 3 | NDM | 67 |
| NDM-5 | 20 | 12 | 2 | 3 | NDM | 63 |
| NDM-6 | 20 | 8 | 0 | 3 | NDM | 69 |
| NDM-7 | 20 | 4 | 4 | 3 | NDM | 69 |
| NDM-8 | 20 | 0 | 8 | 3 | NDM | 69 |
| NMP-1 | 14 | 5 | 2 | 3 | NMP | 76 |
| NMP-2 | 20 | 5 | 2 | 3 | NMP | 70 |
| NMP-3 | 25 | 5 | 2 | 3 | NMP | 65 |
| NMP-4 | 20 | 12 | 2 | 3 | NMP | 63 |

Example 2: Cloud point determination

The cloud point refers to the specific concentration of the non-solvent (water) at which phase separation occurs. This concentration point is where the solution is no longer able to maintain a homogenous single phase and separates into distinct phases, initially forming a turbid solution. The cloud points of several solutions with different polymer concentrations represent the binodale of the ternary system.
To determine the cloud points, solutions with different concentrations of PES in the respective solvent (5-35 wt%) were produced. Water is added to each sample in 100 $\mu$m increments, and the solution is then mixed in a dual asymmetric centrifugal mixer SpeedMixer® by Hauschild, Germany. This is repeated until irreversible turbidity occurs. The compositions of the samples at this point form the binodal of the PES/solvent/water systems in the phase diagram.

With NDM, it is possible to produce solutions having a PES content in the range of 10 -30 wt%.

Example 3a: Preparation of the flatsheet membrane via Non-Solvent Induced Phase Separation (NIPS)

Each of the polymer solutions of Samples NDM-1 to NDM-8 and NMP-1 to NMP-4 from Example 1 is dispensed onto a glass plate and evenly cast into a 200 $\mu$m thick film using a casting knife. The glass plate is then placed in a water bath, which initiates the precipitation of the membrane structure. Afterwards, the membrane is stored in deionized (DI) water for at least 18 hours to ensure complete exchange of the solvent with water. To remove the PVP additives, the membranes are post-treated for 4 hours at 60 °C with 4,000 ppm NaOCl in water and then rinsed with water. The flatsheet membranes were stored in DI water at room temperature for further characterization.

The flatsheet membranes S1 to S8 of the present invention are obtained from polymer solutions of Samples NDM-1 to NDM-8 respectively. The comparative flatsheet membranes CS1 to CS4 are obtained from polymer solutions of Samples NMP-1 to NMP-4 respectively.

Example 3b: Preparation of the flatsheet membrane via Evaporation Induced Phase Separation (EIPS)

For the evaporation-induced phase separation of the polymer, polymer films are casted on the support as previously described in Example 3a from polymer solutions of Samples NDM-1 to NDM-8 and Samples NMP-1 to NMP-4 of Example 1. The solvent is then removed by evaporation under vacuum in an oven heated at 70 °C for 24 hours.

The flatsheet membranes ES1 to ES8 of the present invention are obtained from polymer solutions of Samples NDM-1 to NDM-8 respectively. The comparative flatsheet membranes CES1 to CES4 are obtained from polymer solutions of Samples NMP-1 to NMP-4 respectively.

Example 4: Hollow fiber spinning

A hollow fiber membrane was fabricated from the polymer solution of Sample NDM-2 of Example 1 and Sample NMP-2 of Comparative Example 2.

Hollow fiber membranes are produced using a spinning system as shown in Figure 3.

A pump extrudes the dope solution through a spinneret. At the same time, a bore solution is extruded through the inner nozzle of the spinneret. The inner diameter (a) of the nozzle is 0.82 mm, and the outer diameter (b) is 1.5 mm. The non-solvent in the bore initiates phase separation and forms the typical hollow fiber geometry.

Three different bores were tested. One with only solvent and water (50:50, Bore 1) and two with additional glycerol (Water/Solvent/Glycerol, Bore 2: 25/50/25, Bore 3:50/25/25) The fiber falls into a water precipitation bath (room temperature) where phase separation begins at the shell side of the fiber. The fiber is then passed through a washing bath and finally collected in a container of water, where it is left for at least 18 hours to ensure complete precipitation. To remove the PVP additives from the membranes, the membranes are post-treated for 4 hours at 60 °C with 4,000 ppm NaOCl in aqueous solution and then rinsed with water. The membranes were rinsed for 5 hours at 60 °C in a glycerol/water (50:50) solution before drying at room temperature to prevent pore collapse.

Table 3 lists the spinning parameters used.

Table 3

| No. | Dope | Bore | Dope flow rate (ml/min) | Bore flow rate (ml/min) | Draw speed (m/min) | AirGap (cm) |
|---|---|---|---|---|---|---|
| 1 | NDM-2 | 1 | 3.42 | 4.89 | 2.88 | 11.5 |
| 2 | NDM-2 | 2 | 3.71 | 3.61 | 3.53 | 11.5 |
| 3 | NDM-2 | 3 | 3.48 | 6.17 | 3.53 | 11.5 |
| 4 | NMP-2 | 1 | 3.85 | 5.05 | 6,52 | 11.5 |
| 5 | NMP-2 | 2 | 4.16 | 4.09 | 5.02 | 11.5 |
| 6 | NMP-2 | 3 | 7.21 | 9.37 | 10.6 | 11.5 |

The hollow fiber membranes H1-H3 of the present invention are obtained from polymer solutions of Sample nos. 1-3. The comparative hollow fiber membranes CH1-CH3 are obtained from the polymer solution of Samples 4-6.

Example 5: Scanning electron microscopy (SEM)

High-resolution microscopic membrane morphology was assessed with a Hitachi SU-5000 scanning electron microscope (SEM). The flat sheet and hollow fiber membranes were fractured in liquid nitrogen to obtain the microscopic cross-section morphology.

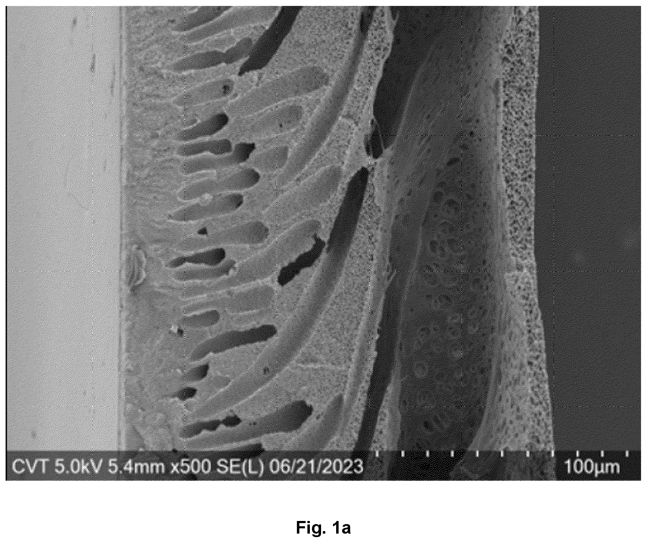

Figure 1a shows a SEM image capture with a 100 $\mu$m scale showing the structure of a sheet membrane according to the present invention prepared with 3-methoxy-N,N-dimethylpropionamide.

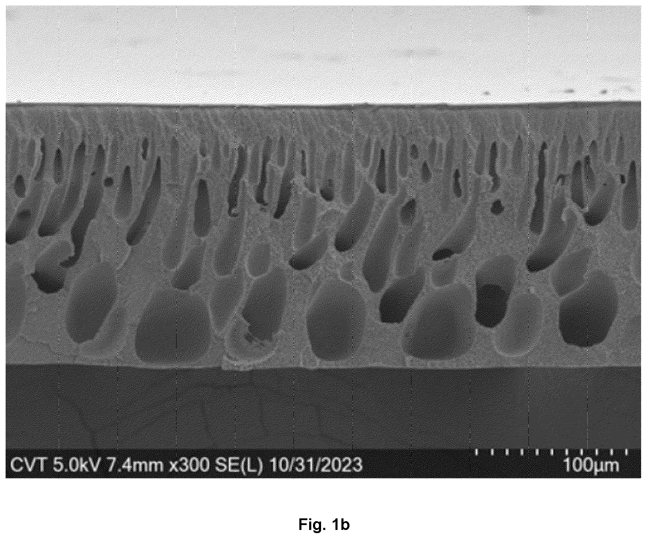

Figure 1b -shows a SEM image capture with a 100 $\mu$m scale showing the structure of a comparative sheet membrane prepared with N-methyl-2-pyrrolidone.

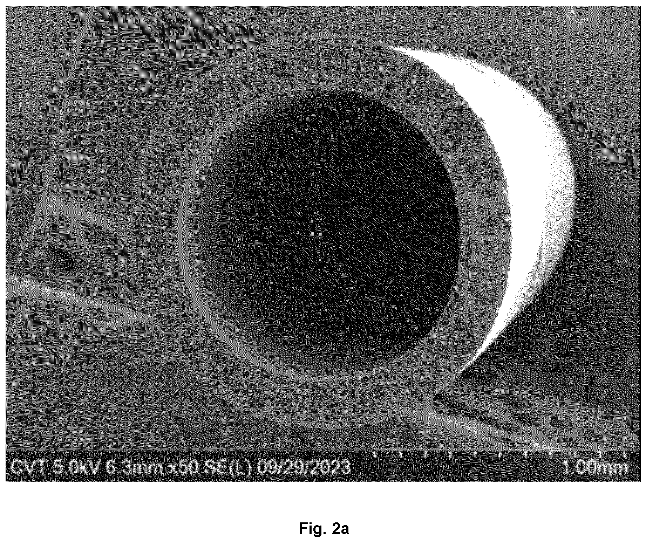

Figure 2a shows a SEM image capture of the structure of the hollow fiber membrane under an electron microscope with a 1 mm scale.

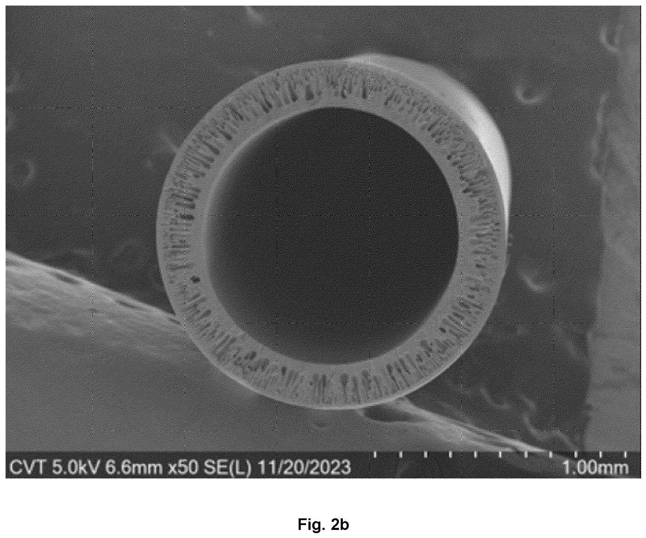

Figure 2b shows a SEM image capture of a comparative hollow fiber membrane under an electron microscope with a 1.00 mm scale.

Example 6: Pure Water Permeability (PWP) of the flatsheet and hollow fiber membranes

The flatsheet membranes S1-S8, hollow fiber membrane H1, comparative flatsheet membranes C1 to-C4 and comparative hollow fiber membrane CH1 from Examples 3a and 4 were characterized by their pure water permeability.

The flatsheet membranes had a diameter of 47 mm and were mounted on a stainless-steel membrane module from Merck Millipore.

The hollow fiber membranes had a length of 35- 45 cm and were mounted on a module with a length of 35- 45 cm.

The pure water permeability was evaluated in dead-end filtration mode using a volumetric method. DI water permeated the wet membranes for 15 min at 1.0 bar transmembrane pressure and the permeate was collected for volume measurement.

The PWP $P_{PWP}$ (L/(m$^2$ h bar)) is expressed as

$$P_{PWP} = \frac{V_{Permeate}}{A_{Membrane} \cdot p_{TMP} \cdot t}$$

formula (I)

With the permeate volume $V_{Permeate}$ [L], active membrane surface area $A_{Membrane}$ [m$^2$], transmembrane pressure $p_{TMP}$ [bar] and permeation time $t$ [h].

The results are shown in Table 4.

Table 4

| membrane | permeability [LMH/bar] |
|---|---|
| S1 | 526 |
| S2 | 458 |
| S3 | 74 |
| S4 | 500 |
| S5 | 510 |
| S6 | 525 |
| S7 | 2100 |
| S8 | 1420 |
| H1 | 330 |
| C1 | 467 |
| C2 | 75 |
| C3 | 35 |
| C4 | 110 |
| CH1 | 22 |

As can be seen from the above results in Table 4, the membranes derived from the polymer solutions made with NDM have significantly higher permeability compared to polymer solutions made with NMP. Higher permeability generally favors faster application processes.

Such improved permeability may result from an improved layer structure. Figure 1a shows flatsheet membrane S2 according to the invention and Figure 1b shows comparative flatsheet membrane C2.- As illustrated in Figure 1a, the flatsheet membranes of the present invention have a higher overall amount of macrovoids, which are smaller than the comparative flatsheet membranes prepared with N-methyl-2-pyrrolidone and depicted in Figure 1b.In addition, flatsheet membranes of the present invention have a thinner sponge layer and a thinner dense layer.

Figure 2a shows hollow fiber membrane H1 according to the invention and Figure 1b shows comparative hollow fiber membrane CH1.Similarly and as depicted in Figure 2a, the hollow fiber membranes of the present invention have a higher overall amount of macrovoids, which are smaller than the comparative hollow fiber membranes prepared with N-methyl-2-pyrrolidone and depicted in Figure 2b. In addition, hollow fiber membranes of the present invention have a thinner sponge layer and a thinner dense layer. Such improved layer structures allow a higher permeability of the membranes according to the invention compared to membranes of the prior art.

Moreover, it is demonstrated that the addition of a certain combination of PVP K30 and PVP K90 in a ratio of 1:1 further improves the layer structure and permeability of the membrane. In particular, flatsheet membrane S7 shows the highest permeability over all examples.

Example 7: Retention of PEG 100 kDa of the flatsheet and hollow fiber membranes

The flatsheet membranes S1-S8, hollow fiber membrane H1, comparative flatsheet membranes C1-C4 and comparative hollow fiber membrane CH1 from Examples 3a and 4 are characterized by their PEG 100 kDa retention ability.

A solution consisting of 1 g/L 100 kDa PEG was used to measure solute retention. The solution was fed in cross-flow through the membrane, and the permeate was collected after defined periods for a total of 3 h. The refractive index of the permeate and feed solution was measured using an Abbemat Performance Plus Refractometer 550 from Anton Paar, and the concentrations were calculated with a previously obtained calibration curve.

From these results the retention $R$ was determined by the following formula (II):

$$R = 1 - \frac{c_{permeate}}{c_{feed}} \qquad \text{formula (II)}$$

With $c_{permeate}$ and $c_{feed}$ as the PEG concentration of permeate and feed solutions, respectively.

The results are shown in Table 5.

Table 5

| membrane | retention PEG100 kDa [%] |
|---|---|
| S1 | 86 |
| S2 | 87 |
| S3 | 93 |
| S4 | 77 |
| S5 | 84 |
| S6 | 70 |
| S7 | 65 |
| S8 | 81 |
| C1 | 82 |
| C2 | 98 |
| C3 | 100 |
| C4 | 95 |
| H1 | 50 |
| CH1 | 70 |

As can be seen from the above results in Tables 4 and 5, the membranes derived from the polymer solutions made with NDM have significantly better permeability while maintaining a similar retention compared to the polymer solutions prepared with NMP.

Example 8: Imide-based flatsheet membrane 11

Imide-based flatsheet membrane I1 according to the present invention and comparative imide-based flatsheet membrane CI1were prepared by evaporation induced phase separtation as described in Example 3b.

For preparing the polymer solution NDM was placed in a container, then 1.5 wt.% of the polyimide powder Matrimid 5218 US was added with stirring.

The resulting polymer solution was dispensed onto a glass plate and evenly cast into a 200 $\mu$m thick film using a casting knife. The glass plate is then placed in a water bath, which initiates the precipitation of the membrane structure. Afterwards, the membrane is stored in deionized (DI) water for at least 18 hours to ensure complete exchange of the solvent with water. To remove the PVP additives, the membranes are post-treated for 4 hours at 60 °C with 4,000 ppm NaOCl in water and then rinsed with water. The flatsheet membranes were stored in DI water at room temperature for further characterization.

Example 9: Gas permeability of imide-based flatsheet membranes

Imide-based flatsheet membrane I1 according to the invention and comparative imide-based flatsheet membrane CI1 were subjected to single gas experiments at 25 °C.

A pure gas permeation set-up with a constant volume was used to determine the selectivities and permeabilities of the gas membranes. The permeate side was set to a minimum pressure $p_{min}$ using a vacuum pump. The feed pressure was a constant 1.5 bar. The pressure increases on the permeate side was measured over time.

The permeability was expressed in the permeability coefficient barrer, wherein 1 barrer is expressed by the following formula (III)

$$1\ barrer = 10^{-10}\ \frac{cm^3}{s \cdot cm \cdot cmHg} = 7.5 \cdot 10^{-18} \frac{m_N^3\ s}{kg} = 2.7 \cdot 10^{-9} \frac{m_N^3\ m}{m^2 h\ bar}$$

formula (III)

The permeability was determined by the following formula (IV):

$$P\,[barrer] = \frac{22.414}{A_{Membrane}} \cdot \frac{l \cdot V}{\Delta p \cdot R \cdot T} \cdot \frac{dp}{dt}$$

formula (IV)

Where $A_{Membrane}$ is the area of the membrane [cm$^2$], $l$ is the thickness of the membrane [cm], $V$ is the volume of the permeate chamber [cm$^3$], $R$ is the ideal gas constant [6236 cm$^3$*cmHg/(mol*K)], $T$ is the temperature in [K] and $\Delta p$ is the pressure difference [bar].

The results are shown in Table 6

Table 6

| flatsheet membrane | I1 | CI1 |
|---|---|---|
| permeability for $CO_2$ [barrer] | 10.1 | 7.3 |
| permeability for $CH_4$ [barrer] | 0.4 | 0.3 |
| permeability for $C_3H_8$ [barrer] | 0.2 | 0.2 |
| permeability for $N_2$ [barrer] | 0.5 | 0.3 |

As can be seen from the results in Table 6, the imide-based flatsheet membrane I1 has a significantly higher permeability for $CO_2$ than the comparative imide-based flatsheet membrane CI1. In particular, the $CO_2/N_2$ selectivity for NMP membranes is 40.7 and for NDM membranes 48.2. Therefore, imide-based flatsheet membranes of the present invention could be used to efficiently separate gases.

**Claims**

1. A polymer solution comprising

   - a polymer
   - water,
   - optionally, an additive, and
   - a 3-alkyloxy-N,N-dialkylpropionamide compound, wherein the alkyl groups are independently selected from alkyl groups having 1, 2 or 3 carbon atoms.

2. The polymer solution according to claim 1, wherein the polymer is a polyamideimide, polysulfone, polyimide, polyvinylidene fluoride or any mixture thereof, preferably polyethersulfone.

3. The polymer solution according to any of claims 1 and 2, wherein the additive is selected from the group comprising polyvinylpyrrolidone, polyacrylates, surfactants, dispersants, poly glycols and any mixture thereof, preferably polyvinylpyrrolidone.

4. The polymer solution according to any of claims 1 to 3, wherein the polymer solution has a viscosity of 5 to 200 Pa * s.

5. The polymer solution according to any of claims 1 to 4, wherein the polymer is present in amounts from 5 to 40 wt.%, preferably from 10 to 30 wt.%, more preferably from 12 to 27 wt.%, based on the total polymer solution, more preferably from 16 to 22 wt.%, based on the total polymer solution.

6. The polymer solution according to any of claims 1 to 5, wherein the water is present in amounts from 0.5 to 10 wt.%, preferably from 1 to 5 wt.%, more preferably from 2 to 4 wt.%, based on the total polymer solution.

7. The polymer solution according to any of claims 1 to 6, wherein the additive is present in amounts from 0.5 to 20 wt.%, preferably from 1 to 15 wt.%, more preferably from 2 to 12 wt.%, based on the total polymer solution.

8. The polymer solution according to any of claims 1 to 7, wherein the 3-alkyloxy-N,N-dialkylpropionamide is present in amounts from 30 to 94 wt.%, preferably from 50 to 88 wt.%, more preferably from 59 to 84 wt.%, based on the total polymer solution.

9. A polymer solution according to any of claims 1 to 8, wherein the 3-alkyloxy-N,N-dialkylpropionamide is 3-methoxy-N,N-dimethylpropionamide.

10. A method for preparing a flat sheet polymer membrane, the method comprising the steps of:

- providing a polymer solution according to any of claims 1 to 9,
- applying conditions to obtain a flat sheet polymer membrane.

11. The method according to claim 10, wherein the conditions to obtain a flat sheet polymer membrane comprise drying the polymer mixture, preferably by heating.

12. The method according to any of claims 10 and 11, wherein the conditions to obtain a flat sheet polmyer membrane comprise adding an anti-solvent to the polymer mixture, preferably water.

13. A flat sheet polymer membrane obtainable by the method of any of claims 10 to 12.

14. A method of preparing a hollow fiber polymer membrane, the method comprising the steps of

- providing a polymer mixture according to any of claims 1 to 9,
- applying conditions to form a hollow fiber polymer membrane.

15. A hollow fiber polymer membrane obtainable by the method of claim 14.

16. Use of 3-alkyloxy-N,N-dimethylpropionamide as a solvent for the preparation of a flat sheet polymer membrane, a hollow fiber polymer membrane, a tubular membrane or a braded membrane.

CVT 5.0kV 5.4mm x500 SE(L) 06/21/2023     100μm

**Fig. 1a**

CVT 5.0kV 7.4mm x300 SE(L) 10/31/2023                    100µm

**Fig. 1b**

CVT 5.0kV 6.3mm x50 SE(L) 09/29/2023      1.00mm

Fig. 2a

**Fig. 2b**

Fig. 3

Europäisches
Patentamt

European
Patent Office

Office européen
des brevets

## EUROPEAN SEARCH REPORT

**Application Number**

EP 24 18 6187

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/187029 A1 (SPERINDIO MATTEO [IT] ET AL) 5 July 2018 (2018-07-05)<br>* claims 1,3,5,8,9 *<br>* paragraph [0105] - paragraph [0108] *<br>* paragraphs [0059], [0041], [0083] *<br>----- | 1,5,7-9 | INV.<br>B01D67/00<br>B01D69/00<br>B01D69/06<br>B01D69/08<br>B01D71/34 |
| X | US 2013/194344 A1 (YOKOHAMA YUUKI [JP] ET AL) 1 August 2013 (2013-08-01)<br>* paragraph [0159] *<br>* paragraphs [0163], [0166], [0169] *<br>----- | 1,3,5,7,9 | B01D71/64<br>B01D71/68 |
| X | WO 2024/129533 A1 (LUBRIZOL CORP [US]) 20 June 2024 (2024-06-20) | 1-13,16 | |
| Y | * claims 1,2,8,9,14,18-21 *<br>* paragraph [0053] - paragraph [0056] *<br>* paragraphs [0026], [0049], [0077], [0052], [0058] *<br>----- | 14,15 | |
| X | US 10 280 335 B2 (CYMER DAYTON LLC [US]) 7 May 2019 (2019-05-07)<br>* claims 1,3,5,8 *<br>* examples 1-4 *<br>----- | 1-5,8,9 | |
| Y | CN 1 557 532 A (LIU SHOUSHAN [CN]) 29 December 2004 (2004-12-29)<br>* claim 5 *<br>----- | 14,15 | **TECHNICAL FIELDS SEARCHED (IPC)**<br><br>B01D<br>A47J<br>B05D<br>C07C<br>C09D<br>C08G |

The present search report has been drawn up for all claims

| Place of search | Date of completion of the search | Examiner |
|---|---|---|
| Munich | 6 September 2024 | Sandin Rodriguez, R |

EPO FORM 1503 03.82 (P04C01)

## ANNEX TO THE EUROPEAN SEARCH REPORT
## ON EUROPEAN PATENT APPLICATION NO.

EP 24 18 6187

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2024

| Patent document cited in search report | Publication date | Patent family member(s) | Publication date |
|---|---|---|---|
| US 2018187029 A1 | 05-07-2018 | BR 112017028586 A2 | 28-08-2018 |
| | | CA 2991492 A1 | 19-01-2017 |
| | | CN 107847965 A | 27-03-2018 |
| | | EP 3319736 A1 | 16-05-2018 |
| | | JP 2018524440 A | 30-08-2018 |
| | | KR 20180028438 A | 16-03-2018 |
| | | US 2018187029 A1 | 05-07-2018 |
| | | WO 2017011250 A1 | 19-01-2017 |
| US 2013194344 A1 | 01-08-2013 | CN 103241024 A | 14-08-2013 |
| | | JP 6051531 B2 | 27-12-2016 |
| | | JP 2013158932 A | 19-08-2013 |
| | | US 2013194344 A1 | 01-08-2013 |
| WO 2024129533 A1 | 20-06-2024 | NONE | |
| US 10280335 B2 | 07-05-2019 | BR 112018074855 A2 | 06-03-2019 |
| | | BR 112018074885 A2 | 06-03-2019 |
| | | BR 112018074915 A2 | 12-03-2019 |
| | | CA 3023729 A1 | 14-12-2017 |
| | | CA 3025179 A1 | 14-12-2017 |
| | | CA 3025322 A1 | 14-12-2017 |
| | | CN 109312072 A | 05-02-2019 |
| | | CN 109415508 A | 01-03-2019 |
| | | CN 109415510 A | 01-03-2019 |
| | | EP 3464422 A1 | 10-04-2019 |
| | | EP 3464423 A1 | 10-04-2019 |
| | | EP 3464424 A1 | 10-04-2019 |
| | | JP 2019518836 A | 04-07-2019 |
| | | JP 2019519637 A | 11-07-2019 |
| | | JP 2019521212 A | 25-07-2019 |
| | | KR 20190015512 A | 13-02-2019 |
| | | KR 20190015753 A | 14-02-2019 |
| | | KR 20190016503 A | 18-02-2019 |
| | | SG 11201810604Q A | 28-12-2018 |
| | | SG 11201810857P A | 30-01-2019 |
| | | SG 11201810900S A | 30-01-2019 |
| | | US 2017349706 A1 | 07-12-2017 |
| | | US 2017349713 A1 | 07-12-2017 |
| | | US 2017349782 A1 | 07-12-2017 |
| | | US 2019112501 A1 | 18-04-2019 |
| | | WO 2017214055 A1 | 14-12-2017 |
| | | WO 2017214056 A1 | 14-12-2017 |
| | | WO 2017214057 A1 | 14-12-2017 |
| CN 1557532 A | 29-12-2004 | NONE | |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 18 6187

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2024

| Patent document cited in search report | Publication date | Patent family member(s) | Publication date |
|---|---|---|---|
| | | | |

EPO FORM P0459

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *CHEMICAL ABSTRACTS*, 25608-63-3
- *CHEMICAL ABSTRACTS*, 42955-03-3
- *CHEMICAL ABSTRACTS*, 104983-64-4
- *CHEMICAL ABSTRACTS*, 9003-39-8